# EUROPEAN PATENT SPECIFICATION

(11) **EP 1 064 856 B1**
(45) Date of publication and mention of the grant of the patent: **06.04.2005**
(21) Application number: 00113337.0
(22) Date of filing: 23.06.2000
(51) Int. Cl.: A23L 1/22, B01J 13/04, A23P 1/04, A23P 1/06

(54) **Encapsulation of active ingredients**
Einkapselung von Aktivsubstanzen
Mise en capsules de substances actives

(30) Priority: 30.06.1999 EP 99112446
(43) Date of publication of application: 03.01.2001
(73) Proprietor: Givaudan SA, 1214 Vernier-Genève (CH)
(72) Inventor: De Ross, Kris Bart, 8620 Wetzikon (CH); Perren, Matthias, 5200 Brugg (CH); Sherman, Gregory Alan, Cincinnati, Ohio 45245 (US)
(74) Representative: McStea, John Anthony

(56) References cited:
- EP-A- 0 861 852
- WO-A-91/17821
- US-A- 4 576 737
- US-A- 4 634 598

## Description

There exists a demand for encapsulating active ingredients, which are food, feed, beverage or pharmaceutical additives, especially vitamins and more specifically flavors.

Among them, the need for dry versions of liquid flavors is the most important one. Especially dry versions of liquid flavors are needed for flavoring dry food and beverage products, such as, for example, tea, instant coffee, instant soups and desserts, dry beverage powders, effervescent tablets and pharmaceutical products.

Several techniques have been developed for producing dry flavors. Among them, the plating on a carrier technique and the spray drying technique are most widely used. These methods are simple and cost saving. However, both techniques have the serious disadvantage of providing no or only limited protection of the flavor against heat, moisture, and oxydation. Hence the appropriate encapsulated flavors have a bad shelf life stability. Therefore, these methods are not suitable for use in combination with flavors sensitive against oxidation such as, for example, citrus flavors.

In this respect one of the most successful approaches to produce dry flavors and especially to improve the shelf life stability of dry flavors, is their encapsulation in a glassy sugar matrix. The preferred technology for producing glassy encapsulated flavors is extrusion. The products of the extrusion technology are very stable against oxidation and show high retention of volatiles during storage. However, extruded flavors are considerably more expensive than spray dried flavors because of the relatively low flavor load and the need of using a multi-step and multi-component process consisting of at least a heating, an extrusion, a washing (usually with isopropanol), a drying and a grinding step. Moreover, a solvent recovery step has normally to be included as well. Another drawbank of encapsulation of flavors by the extrusion technique is that the flavor is subjected to high temperatures, which might induce decomposition of sensitive flavor constituents. Hence, there exists a need to keep the melt temperature as low as possible. But this limits the choice of carrier materials. Low molecular weight carbohydrates, in combination with plasticizers such as glycerin and water, are used to keep the melt temperature as low as possible. However, a high content of low molecular weight carbohydrates and glycerin increase the hygroscopicity of the resulting powder which, in turn, results in a non-free-flowing, sticky product with high risk of lump formation. Increase of water content is also problematic because of the enhanced flavor losses at the exit of the extruder and/or subsequent drying.

US Patent No. 3,971,852 describes microparticulate compositions with flavor oil encapsulated in a glassy matrix that consists of a mixture of a polysaccharide with emulsifying properties and low molecular weight polyhydroxy compounds such as sugars or sugar alcohols. Standard spray drying is used to produce spherical particles having a flavor oil contant of up to 80% by volume and an extractable oil of not more than 5%. The stability of the resulting dry flavors is claimed to be better than spray dried flavors prepared according to prior art.

US Patent 3,314,803 describes a method for encapsulating volatile flavor compounds in a glassy mannitol matrix by spray drying.

US Patent No. 3,554,768 describes a method for fixing acetaldehyde in selected carbohydrates by drying an aqueous solution of acetaldehyde and selected carbohydrates.

One of the drawbacks of the above mentioned methods is the high hygroscopicity of the matrix materials. To achieve good stability these products require storage under exclusion of ambient moisture and air. Thus, antioxidants have to be added to prevent oxidation of the flavors fixed in the matrix.

US Patent No. 4,532,145 describes a spray drying method for encapsulating volatile flavor compounds in a spray dried, moisture-stable matrix consisting of 10-30% low molecular weight carbohydrate such as maltose and at least 70% high molecular weight materials such as maltodextrin. Spray drying is carried out at relatively low temperature, i.e. the inlet temperature ranging from 100 to 180°C and the outlet temperature ranging between 50 and 80°C.

US Patent No. 5,124,126 describes a method to prepare a moisture and oxygen stable, antioxidant free, fixed flavor having a free flow bulk density of at least 0.5 g/ml and a void space of less than 20% of the spray dried solids, comprising a flavorant encapsulated in a carbohydrate matrix consisting of 22-45% of mono- and disaccharides wherein at least 50% of the mono. and disaccharides is maltose, from 25-50% maltodextrin and from 10-35% high molecular weight film forming carbohydrate. The encapsulated flavor is said to be stable against oxidation for one year at 70° F. The products are obtained at moderate inlet and outlet temperatures of 100-180 and 70-100°C, respectively.

In all above mentioned spray drying techniques the thermoplastic nature of glassy matrices pose significant processing problems, especially sticking of the thermoplastic particles to the wall of the dryer. Moreover, loss of volatile flavor compounds is still substantial and the resulting powders have relatiely small particle size resulting in dust formation during handling.

With a multi-stage spray drying method detrimental effects of particle expansion are avoided by spraying at high air temperature to create particles having a semi solid surface in form of a quickly built skin and subsequent continued drying at lower air temperatures in a fluid bed or moving belt dryer. The positive effect of two-stage spray drying on aroma retention has been confirmed experimentally by W.J. Coumans, P.J.A.M. Kerkhof and S. Bruin, Drying Technol. 12 (1 and 2), 99-149 (1994). According to the described process it is not possible to produce particles having high shelf life stability, i.e. having oxygen stability and/or low or no active ingredient diffusing out.

The French Patent 2,686,486 discloses a method for drying honey using a multistage spray dryer. The advantage of this drying process is said to be the minimum decomposition of sensitive ingredients like vitamins and flavor compounds due to the low temperature during drying. No attempts have been reported to encapsulate flavors.

The PCT publication WO 91/1782 discloses a method for preparing micro-capsules encapsulating flavorants by multi-stage spray drying. An emulsion, a suspension or a solution of flavorant and matrix material is sprayed into a spraying tower in a cloud of simultaneously introduced fine particles of starch at a 50-120°C. The emulsion drops having freshly solidified surfaces were then transferred to a fluidized bed and maintained fluidized for several hours at 30°C. The particles are more dense and larger than prior art micro-capsules. This characteristic contributes to reduced exposure to oxygen. But a drawback of this process is the long drying time in the fluid bed dryer and the need of introducing of a second carrier or coating. The long resting time in the fluidized bed is here necessary because the already solidified surface of the particles derived from the spray drying hinders the water content inside the particles to migrate out easily, especially to diffuse out of the central part of the particles, thereby also loosing sensitive fragrant materials.

Although what is said hereafter is related directly to flavors it is clear to a person of skill in the art that it is also valid for other active ingredients. Thus, the invention is not restricted to flavors only but incorporates all active ingredients as they are defined at the beginning.

From the above description of the prior art it results that there exists a need for a process which overcomes most of the afore mentioned disadvantages or which at least improves an already known process in that the new process is able to produce in a cost saving way micro-capsules containing one or more active ingredients in a glassy matrix which micro-capsules are in the range of 100-400 µm, whereby the micro-capsules shall permit low hygroscopicity and be oxidation stable, i.e. addition of antioxydants shall no more be necessary, and in case of liquid and/or volatile ingredients, especially in case of liquid and/or volatile flavors, at least 85% of their load at the beginning of the process should be kept in the micro-capsules. Further the powder of the micro-capsules should be free flowing and non-dusting and easy dissolvable or distributable in food, feed or beverage, i.e. easy to use. This all is object to the present invention.

Surprisingly, it has been found that the drawbacks of the prior art spray drying methods for encapsulation in glassy matrices can be reduced or eliminated by the process of the invention, which process using a multi-stage spray drying unit is characterized by the following steps:
a) forming an aqueous solution which contains on solid basis from 40 to 70% by weight of at least one low molecular weight carbohydrate and/or polyhydroxy compound and 30-60% by weight of at least one high molecular weight film forming agent, whereby the aqueous solution contains at least 50% by weight of said agent(s).
b) incorporating at least one active ingredient into the solution of step a) and building an emulsion or suspension, whereby said emulsion or suspension contains on non-aqueous basis between 1-35% by weight of the active ingredient(s).
c) spray drying the emulsion or suspension of step b) into a spray drying tower at an air inlet temperature of 100-180°C and an air outlet temperature of 60-95°C;
d) transferring to a fluid bed section the resulting surface dried semi-solid micro-particles of step c) having a water content of about 10-20% by weight and having a particle size of about 10-200 µm and continuing drying and simultaneously agglomerating said micro-particles at an air temperature of between 25°C and 55°C, especially at about 40-50°C, resulting in solid, free-flowing particles with a glassy matrix having mainly a size of 400 µm or lower and having a water content of about 2-6% by weight;
e) collecting the particles of step d), at least 90% by weight of that particles having a size in the range of 100-400 µm and a water content of 0.5-4% by weight and (simultaneously) recycling the particles having a size mainly below about 100 µm (fines) from the fluid bed either into the spray dying tower to allow growth of these particles by wetting the particles with fresh sprayed in emulsion or suspension of step b) or to the upper part of the fluid bed to allow growth of these particles by agglomeration to a size in the range of 100-400 µm.

The active ingredient may be a flavor, fragrance and/or vitamin for a food, feed, beverage or pharmaceutical product. Preferably the flavor is selected from the group consisting of a single flavor ingredient, compounded flavor, process flavor, essential oil or extract, whereby the essential oil especially is selected from the group consisting of lime oil, lemon oil, orange oil, peppermint oil, cinnamon, pepper, ginger and mixtures thereof.

So, the present invention specifically provides a process for the production of flavors encapsulated in a glassy matrix in the form of free-flowing, dust-free powder of micro-capsules, at least 90 % by weight, having a size of about 100-400 µm, which in its properties exceeds the advantages provided by the extruded flavors, which is regarded as the best prior art product, but that can be produced in a continuous process cycle and with higher flavor loads, thus resulting in significantly lower production costs and costs in use.

The process of the invention to produce these free-flowing, glassy matrix encapsulated flavors at lower product exposure temperatures than during standard spray drying in order to improve flavor retention reduce thermal decomposition of sensitive flavors and, further, enhance shelf life stability by reducing the matrix porosity resulting from expansion and ballooning that takes place at high drying rates.

In addition, as the process of the invention for the production of free-flowing, glassy encapsulated flavors of that above mentioned intermediate particle size needs no prolonged drying times and coatings, as, for example, described in the above cited publication WO 91/17821, the production costs are low.

Further, the process of the invention produces free-flowing glassy particles of low hygroscopicity by reducing the sugar content of the matrix without the need to increase the temperature during the encapsulation process as required with extrusion processes.

Further details and advantages of the process according to the present invention are described hereafter.

Surprisingly, by the process according to the present invention it is possible to encapsulate also volatile flavors and/or other active ingredients in a glassy matrix to provide a dense, free flowing powder of 100-400 µm particle size that contains a high level of the volatile encapsulant.

Generally, the process of the invention comprises the steps of (1) preparing an aqueous solution of the matrix materials, (2) mixing the flavor into the aqueous solution with stirring to form an emulsion or suspension, (3) spraying the emulsion in a spray drying tower under the supply of hot air to create quickly a semi solid skin able for outtake of moisture (water), and (4) subsequently subjecting the resulting particles to continued drying at lower temperatures in a fluid bed.

The matrix materials consist of low molecular weight water-soluble molecules, and at least one high molecular weight film forming agent. The low molecular weight water-soluble molecules are mono-, di- and oligosaccharides, especially glucose, fructose, maltose, sucrose, lactose, maltodextrin and inulin, or polyhydroxy compounds, especially xylitol, mannitol, sorbitol, lactitol, maltitol and isomalt. The film forming agent material is preferably protein, gum acacia, pectin, modified starch (such as, for example, Capsule E® (octenyl succinated starch, offered by National Starch), or a polyglycerol fatty acid ester, or a mixture thereof.

If the active ingredient is a water-insoluble liquid, especially a flavor oil, in order to build an emulsion or suspension, the active ingredient is preferably added to the aqueous solution of matrix materials and the mixture is then homogenized until its droplet/particle size is between about 0.2 and 10 µm, preferably about 1-2 µm whereby the emulsion or suspension is preferably adjusted to a viscosity of about 400-1000 cP at 40°C. The amount of the active ingredient, especially of the flavor oil, in the emulsion or suspension is on non-aqueous basis from about 1 to 30 % by weight, preferably from 5 to 25%, more preferably from 10 to 20%.

In an embodiment of the process of the invention, the liquid drops are specifically dried in two steps:

In the first step the emulsion which is preferably heated to between 30 and 50°C and sprayed into the spray drying tower in form of fine drops built by means of a rotating disc or a nozzle where they meet a stream of air of a temperature of between 130 and 180°C, more specifically of a temperature of between 145-165°C. As a result, the matrix material in the outer part of the drops solidifies forming particles with a skin that is still permeable for water but no longer permeable for flavorants. The temperature of the hot air is kept high enough that migration of moisture from the inside to the outside may take place within short time but kept low enough to prevent an explosion of steam in the droplets. Otherwise, explosion of steam would increase porosity, and hence, make the matrix permeable also to flavors and oxygen yielding flavor loss, either as liquid or by volatilization and/or oxydation of the flavors. Therefore, the temperature at the outlet of the spray dryer is normally kept at 95°C or below 95°C, specifically in the range of 60-95°C.

In the second step of the process the powder is fluidized in the internal fluid bed where some agglomeration takes place, which is supported by the residual moisture in the particles which softens the surface when migrating from the inside to the outside of the particles. Residence time in the internal fluid bed is normally about 10 to 30 minutes and depends on the size of the envisaged particle size distribution of the end product. Incoming air at temperature from 25-60°C , specifically at a temperature of about 40-50°C, passing through the fluid bed further dries the particles. Those particles having the envisaged size are seperated or collected, e.g. sieved off, and the fines are recirculated. Thus, particles are continuously dried and removed. The seperated particles have a bulk density of at least 0.4 g/ml and a moisture content of 0.5-4 % by weight.

The fine particles, mainly below about 100 µm (fines) are preferably collected, by cyclones, or in filters and returned into the spray dryer tower or, alternatively, to the upper part of the fluid bed where they are agglomerated with the other particles thereby enhancing its size to a size in the envisaged range of 100-400 µm. By this way a dust free powder is obtained.

A method for flavoring a food or beverage product or feed supplement may advantageously be performed by adding the encapsulated flavor in form of micro-particles prepared by the process according to the invention in an effective amount. The micro-particles may be compressed to build bigger units, especially may be compressed into tablets, which in some applications might have an advantage in handling. Preferably the food in this respect is a dry mix of food, especially an instant soup, sauce or dessert or confectionery, and the beverage product preferably is a dry beverage product, especially a dry beverage powder. More preferably, the dry beverage product is a tea or instant coffee.

The present invention is described further in the following examples which are presented solely for the non-limiting purpose of further illustrating the invention.

### EXAMPLE 1

An emulsion was prepared from the ingredients listed below:

| *Ingredient* | *Quantity (kg)* |
|---|---|
| Water | 78.49 |
| Potassium hydroxide | 0.04 |
| N-Lok™ | 24.91 |
| Maltodextrin | 46.74 |
| Santone™ 8-1-0 (polyglycerol oleic acid ester) | 2.13 |
| Sucrose | 71.94 |
| Lemon oil | 25.75 |
| Total: | 250.00 |

Water, contained in a jacketed tank, was heated to 50-60°C and potassium hydroxide was added with stirring using a high shear mixer. Then the other ingredients were added one after the other. Addition of the next ingredient was not started before the last one had completely dissolved. Finally, the lemon oil (flavor oil) was added and the mixture was homogenized until the oil droplet size was between 5 and 10 µm. The emulsion temperature was kept at 30-40°C while spray drying. The feed was pumped through a highpressure homogenizer set at 150 bar in order to further reduce the size of the flavor droplets to about 1 to 2 µm.

The emulsion was fed to a pressure nozzle installed on a multistage spray dryer Anhydro SPD and sprayed into the spraying tower under the conditions specified below.

| | |
|---|---|
| Total solids [kg] | 171.5 |
| Total solids [%] | 63.8 |
| Inlet spray [°C] | 130-150 |
| Outlet spray [°C] | 70 |
| Inlet internal fluid bed [°C] | 40 |
| Inlet external fluid bed [°C] | 35 / 25 |
| Spray pressure [bar] | 130 |
| Nozzle (type, diameter) | 27/1; 660 µm |
| Time [hrs] | 2.15 |
| Powder yield [kg] size: 100-400 µm | 166.2 |
| Powder yield [%] size: 100-400 µm | 97 |

The fines from the cyclone were recycled into the internal fluid bed. Thus a free flowing powder was obtained with the following properties:
Mean particle size(D(v,0.5)): 212 µm
Moisture content: 2.5%
Tap bulk density: 0.71 g/ml
Absolute density as determined by air pycnometer: 1.2817 g/ml
Total flavor content: 13.5%
Surface oil: <0.1%

### EXAMPLE 2

An emulsion was prepared from the ingredients listed below:

| *Ingredient* | *Quantity (kg)* |
|---|---|
| Water | 95.00 |
| Capsul™ | 15.81 |
| Maltodextrin | 39.52 |
| Sucrose | 76.42 |
| Orange Flavor 74379 | 23.25 |
| Total: | 250.00 |

The emulsion was prepared as described in example 1. Water was heated to 50-60°C and the solid ingredients were dissolved in it one after the other. After adding the orange flavor an emulsion was prepared and dried on the multistage spray dryer. The emulsion temperature was kept at 45-50°C while spray drying. The details of the experiment are listed below.

| | |
|---|---|
| Total solids [kg] | 155.0 |
| Total solids [%] | 62.0 |
| Inlet spray [°C] | 145-165 |
| Outlet spray [°C] | 70 - 73 |
| Inlet internal fluid bed [°C] | 55 |
| Inlet external fluid bed [°C] | 40 / 25 |
| Spray pressure [bar] | 100 - 115 |
| Nozzle | 27/1; 670 µm |
| Time [hrs] | 2.33 |
| Powder yield [kg] size: 100-400 µm | 147 |
| Powder yield [%] size: 100-400 µm | 95 |

A free flowing powder was obtained with the following properties:
Mean particle size (D(v,0.5)): 142 µm
Moisture content: 3.8%
Tap bulk density: 0.65 g/ml
Absolute density as determined by air pycnometer: 1.2390 g/ml
Total flavor content: 14.0%
Surface oil: <0.1%

The products of both examples are free flowing and non-dusting powders consisting of particles having a high active ingredient content which particles have a size double that produced according normal tower dryer techniques but yet of that size which makes it easy for its dissolution or distribution in the food, feed, beverage or pharmaceutical end product. The flavor oil recovery is high, namely 88-95%, whereby the so-called surface oil, i.e. the flavor oil persisting on the surface of the particles, is extremely low. The particles have high densities which is indicative for low porosities of the particles. Further, the oxygen uptake in meq/kg flavor oil in encapsulation is very low indicating excellent encapsulation protection from oxygen attack and also from friability.

The shelf life is about 24 to 36 months. Thus, based on the above analytical results and the specific configuration of the micro particles the shelf life is enhanced tremendously compared with encapsulated flavor particles prepared according methods of the state of the art. The yielded extremely good flavor stability and, hence, the significantly longer shelf life is not known so far for similar products.

While the invention has been illustrated and described with respect to illustrative embodiments and modes of practice, it will be apparent to those skilled in the art that the invention is not to be limited by the illustrative embodiments and modes of practice.

## Claims

1. A process for preparing free-flowing and during handling dust-free micro-particles, at least 90% by weight having a diameter of 100-400 µm, containing one or more active ingredients in a glassy matrix, using a multi-stage spray drying unit comprising the steps of:
a) forming an aqueous solution which contains on solid basis from 40 to 70 % by weight of at least one low molecular weight carbohydrate and/or polyhydroxy compound and 30-60% by weight of at least one high molecular weight film forming agent, whereby the aqueous solution contains at least 50% by weight of said agent(s).
b) incorporating at least one active ingredient into the solution of step a) and building an emulsion or suspension, whereby said emulsion or suspension contains on aqueous basis between 1-35% by weight of the active ingredient(s).
c) spray drying the emulsion or suspension of step b) into a spray drying tower at an air inlet temperature of 100-180°C and an air outlet temperature of 60-95°C;
d) transferring to a fluid bed section the resulting surface dried semi-solid micro-particles of step c) having a water content of about 10-20% by weight and having a particle size of about 10-200 µm and continuing drying and simultaneously agglomerating said micro-particles at an air temperature of between 25°C and 55°C, especially at about 40-50°C, resulting in solid, free-flowing particles with a glassy matrix having mainly a size of 400 µm or lower and having a water content of about 2-6% by weight;
e) collecting the particles of step d), at least 90% by weight of that particles having a size in the range of 100-400 µm and a water content of 0.5-4% by weight and recycling the particles having a size mainly below about 100 µm from the fluid bed either into the spray drying tower to allow growth of these particles by wetting the particles with fresh sprayed in emulsion or suspension of step b) or to the upper part of the fluid bed to allow growth of these particles by agglomeration to a size in the range of 100-400 µm;

2. The process of claim 1, wherein the active ingredient is a flavor, fragrance and/or a vitamin for a food, feed, beverage, or pharmaceutical product.

3. The process of claim 2, wherein the flavor is selected from the group consisting of a single flavor ingredient, compounded flavor, process flavor, essential oil or extract.

4. The process of claim 3, wherein the essential oil is selected from the group consisting of lime oil, lemon oil, orange oil, peppermint oil, cinnamon, pepper, ginger and mixtures thereof.

5. The process of any one of the claims 1-4, wherein the low molecular weight carbohydrate is a mono-, di- and oligosaccharide and/or the corresponding alcohol.

6. The process of claim 5, wherein the carbohydrate is selected from the group consisting of glucose, fructose, maltose, sucrose, lactose, maltodextrin and inulin.

7. The process of any one of the claims 1-4, wherein the polyhydroxy compound is selected from the group consisting of xylitol, mannitol, sorbitol, lactitol, maltitol and isomalt.

8. The process of any one of the claims 1-7, wherein the film forming agent is selected from the group consisting of protein, gum acacia, pectin, modified starch and a polyglycerol fatty acid ester.

9. The process of any one of the claims 1-8, wherein said spray drying is performed at an air inlet temperature of about 130-180°C, and an air outlet temperature of about 60-95°C.

10. The process of claim 9, wherein the air inlet temperature is 145-165°C.

11. A dust-free powder of micro-capsules, at least 90% by weight having a particle size of about 100-400 µm, with a bulk density of at least 0.4 g/ml and a moisture content of 0.5-4% by weight having a glassy matrix of at least one mono-, di- and oligosaccharide and/or the corresponding alcohol containing entrapped at least one active ingredient, said particles being formed by spraying an aqueous emulsion or suspension of active ingredient(s) and matrix material into a spray drying tower under the supply of air at a temperature of about 100-180°C, preferably at a temperature of 130-180°C, more preferably at a temperature of 145-165°C, transferring the partly dried particles to a fluid bed for final drying at a temperature of between 25 and 60°C , more preferably at a temperature of about 40-50°C, while recirculating the finer particles from the fluid bed into the spray drying tower to allow particle growth of these particles by wetting the particles with fresh sprayed in emulsion or suspension or to the upper part of the fluid bed to allow the growth of these particles by agglomeration.

12. A method for flavoring a food or beverage product or feed supplement, comprising adding the encapsulated flavor in form of micro-particles prepared by the process according to any one of the claims 1-10 in an effective amount.

13. The method of claim 12, wherein the micro-particles are compressed into tablets.

14. The method of claim 12 or 13, comprising adding the encapsulated flavor to a dry mix of food, especially to an instant soup, sauce or dessert.

15. The method of claim 12, wherein the beverage product is a dry beverage product, especially a dry beverage powder.

16. The method of claim 15, wherein the dry beverage product is tea or instant coffee.

17. The method of claim 12, comprising adding the encapsulated flavor to confectionery.

## Patentansprüche

1. Verfahren zur Herstellung von rieselfähigen und während einer Handhabung staubfreien Mikropartikeln, von denen mindestens 90 Gewichtsprozent einen Durchmesser von 100 bis 400 µm aufweisen, einen oder mehr wirksame Inhaltsstoff(e) in einer glasigen Matrix enthalten, unter Verwendung einer mehrstufigen Sprühtrocknungseinheit, wobei das Verfahren die Stufen umfasst von:
a) Bildung einer wässrigen Lösung, die auf Feststoffbasis von 40 bis 70 Gewichtsprozent von mindestens einem Kohlenhydrat mit niedrigem Molekulargewicht und/oder einer Polyhydroxyverbindung und 30 bis 60 Gewichtsprozent von mindestens einem Film bildenden Mittel mit hohem Molekulargewicht enthält, wobei die wässrige Lösung mindestens 50 Gewichtsprozent von dem/den Mittel(n) enthält;
b) Einverleibung von mindestens einem wirksamen inhaltsstoff in die Lösung von Stufe a) und Bildung einer Emulsion oder Suspension, wobei die Emulsion oder Suspension auf einer wässrigen Basis zwischen 1 bis 35 Gewichtsprozent von dem/den wirksamen Inhaltsstoff(en) enthält;
c) Sprühtrocknung der Emulsion oder Suspension von Stufe b) in einem Sprühtrocknungsturm bei einer Lufteinlasstemperatur von 100 bis 180°C und einer Luftauslasstemperatur von 60 bis 95°C;
d) Überführung der erhaltenen oberflächengetrockneten semifesten Mikropartikel von Stufe c), die einen Wassergehalt von etwa 10 bis 20 Gewichtsprozent aufweisen und eine Partikelgröße von etwa 10 bis 200 µm aufweisen, in einen Fließbettabschnitt und Fortsetzung der Trocknung und simultanes Agglomerieren der Mikropartikel bei einer Lufttemperatur von zwischen 25°C und 55°C, insbesondere bei etwa 40 bis 50°C, wodurch feste, rieselfähige Partikel mit einer glasigen Matrix erhalten werden, die überwiegend eine Größe von 400 µm oder weniger aufweisen und einen Wassergehalt von etwa 2 bis 6 Gewichtsprozent aufweisen;
e) Sammlung der Partikel von Stufe d), wobei mindestens 90 Gewichtsprozent der Partikel eine Größe in einem Bereich von 100 bis 400 µm aufweisen und einen Wassergehalt von 0,5 bis 4 Gewichtsprozent und ein Recycling der Partikel, die eine Größe aufweisen von überwiegend weniger als etwa 100 µm aus dem Fließbett entweder in den Sprühtrocknungsturm, um Wachstum dieser Partikel zu ermöglichen durch Befeuchtung der Partikel mit frisch eingesprühter Emulsion oder Suspension von Stufe b) oder in den oberen Teil des Fließbetts, um Wachstum dieser Partikel zu ermöglichen durch Agglomerieren zu einer Größe im Bereich von 100 bis 400 µm.

2. Verfahren nach Anspruch 1, wobei der wirksame Inhaltsstoff für ein Aroma oder einen Geschmacksstoff, einen Duftstoff und/oder ein Vitamin für ein Nahrungsmittel-, Futter-, Getränke- oder pharmazeutisches Produkt steht.

3. Verfahren nach Anspruch 2, wobei das Aroma oder der Geschmacksstoff ausgewählt ist aus der Gruppe, bestehend aus einem einzelnen Aromabestandteil, zusammengesetzten Aroma, Verfahrens- oder Aufarbeitungsaroma, ein essentielles Öl oder Extrakt.

4. Verfahren nach Anspruch 3, wobei das essentielle Öl ausgewählt ist aus der Gruppe, bestehend aus Limonenöl, Citronenöl, Orangenöl, Pfefferminzöl, Zimt, Pfeffer, Ingwer und Gemischen davon.

5. Verfahren nach einem beliebigen der Ansprüche 1 bis 4, wobei das Kohlenhydrat mit niedrigem Molekulargewicht für ein Mono-, Di- und Oligosaccharid und/oder den entsprechenden Alkohol steht.

6. Verfahren nach Anspruch 5, wobei das Kohlenhydrat ausgewählt ist aus der Gruppe bestehend aus Glucose, Fructose, Maltose, Saccharose, Lactose, Maltodextrin und Inulin.

7. Verfahren nach einem beliebigen der Ansprüche 1 bis 4, wobei die Polyhydroxyverbindung ausgewählt ist aus der Gruppe, bestehend aus Xylit, Mannit, Sorbit, Lactitol, Maltitol oder Maltit und Isomalt.

8. Verfahren nach einem beliebigen der Ansprüche 1 bis 7, wobei das Film bildende Mittel ausgewählt ist aus der Gruppe, bestehend aus Proteinen, Akaziengummi, Pektin, modifizierter Stärke und einem Polyglycerinfettsäureester.

9. Verfahren nach einem beliebigen der Ansprüche 1 bis 8, wobei die Sprühtrocknung durchgeführt wird bei einer Lufteinlasstemperatur von etwa 130 bis 180°C und einer Luftauslasstemperatur von etwa 60 bis 95°C.

10. Verfahren nach Anspruch 9, wobei die Lufteinlasstemperatur 145 bis 165°C beträgt.

11. Staubfreies Pulver von Mikrokapseln, die zu mindestens 90 Gewichtsprozent eine Partikelgröße von etwa 100 bis 400 µm aufweisen, mit einer Schüttdichte von mindestens 0,4 g/ml und einem Feuchtigkeitsgehalt von 0,5 bis 4 Gewichtsprozent mit einer glasigen Matrix von mindestens einem Mono-, Di- und Oligosaccharid und/oder dem entsprechenden Alkohol, und die mindestens einen wirksamen Inhaltsstoff eingeschlossen enthalten, wobei die Partikel gebildet werden durch Sprühtrocknung einer wässrigen Emulsion oder Suspension von einem oder mehr wirksamen Inhaltsstoff(en) und Matrixmaterial in einem Sprühtrocknungsturm unter Zufuhr von Luft bei einer Temperatur von etwa 100 bis 180°C, vorzugsweise bei einer Temperatur von 130 bis 180°C, besonders bevorzugt bei einer Temperatur von 145 bis 165°C, Übertragung der teilweise getrockneten Partikel in ein Fließbett zur Enttrocknung bei einer Temperatur von zwischen 25 und 60°C, besonders bevorzugt bei einer Temperatur von etwa 40 bis 50°C, während einer Rückführung der feineren Partikel aus dem Fließbett in den Sprühtrocknungsturm, um Partikelwachstum dieser Partikel zu ermöglichen durch Befeuchtung der Partikel mit frisch eingesprühter Emulsion oder Suspension in den oberen Teil des Fließbetts, um das Wachstum dieser Partikel durch Agglomerieren zu ermöglichen.

12. Verfahren zur Aromatisierung eines Nahrungsmittel- oder Getränkeprodukts oder Nahrungsergänzungsmittels, umfassend die Zugabe des verkapselten Aromas oder Aromastoffs in Form von Mikropartikeln, die hergestellt sind durch das Verfahren nach einem beliebigen der Ansprüche 1 bis 10 in einer wirksamen Menge.

13. Verfahren nach Anspruch 12, wobei die Mikropartikel zu Tabletten gepresst werden.

14. Verfahren nach Anspruch 12 oder 13, umfassend die Zugabe des verkapselten Aromas oder Aromastoffs zu einem trockenen Gemisch von Nahrung, insbesondere zu einer Instant- oder Fertigsuppe, -soße oder -dessert.

15. Verfahren nach Anspruch 12, wobei das Getränkeprodukt für ein trockenes Getränkeprodukt, insbesondere ein trockenes Getränkepulver, steht.

16. Verfahren nach Anspruch 15, wobei das trockene Getränkeprodukt für Tee oder Instant-Kaffee steht.

17. Verfahren nach Anspruch 12, umfassend die Zugabe des verkapselten Aromas zu Süßwaren.

## Revendications

1. Procédé pour préparer des microparticules meubles et exemptes de poussière en cours de manipulation, dont au moins 90 % en poids ont un diamètre de 100 µm à 400 µm, contenant un ou plusieurs ingrédients actifs dans une matrice vitreuse, en utilisant une unité de séchage par pulvérisation à plusieurs étages comprenant les étapes suivantes :
a) on forme une solution aqueuse qui contient, sur la base de solides, 40 % à 70 % en poids d'au moins un hydrate de carbone et/ou un composé polyhydroxylé de faible poids moléculaire et 30 % à 60 % en poids d'au moins un agent filmogène de poids moléculaire élevé, la solution aqueuse contenant au moins 50 % en poids du ou desdits agents;
b) on incorpore au moins un ingrédient actif à la solution de l'étape a) et on prépare une émulsion ou une suspension, ladite émulsion ou suspension contenant sur base aqueuse 1 % à 35 % en poids du ou des ingrédients actifs;
c) on sèche par pulvérisation l'émulsion ou la suspension de l'étape b) dans une tour de séchage par pulvérisation à une température d'entrée d'air de 100 °C à 180 °C et à une température de sortie d'air de 60 °C à 95 °C;
d) on transfère à une section de lit fluidisé les microparticules semi-solides séchées en surface obtenues de l'étape c) ayant une teneur en eau d'environ 10 % à 20 % en poids et ayant une taille particulaire d'environ 10 µm à 200 µm et on poursuit le séchage tout en agglomérant simultanément lesdites microparticules à une température de l'air de 25 °C à 55 °C, spécialement à environ 40 °C à 50 °C, ce qui permet d'obtenir des particules solides meubles avec une matrice vitreuse ayant principalement une taille de 400 µm ou moins et ayant une teneur en eau d'environ 2 % à 6 % en poids; et
e) on recueille les particules de l'étape d), au moins 90 % en poids de ces particules ayant une taille dans la plage de 100 µm à 400 µm et une teneur en eau de 0,5 % à 4 % en poids et on recycle les particules ayant une taille principalement en dessous d'environ 100 µm du lit fluidisé dans la tour de séchage par pulvérisation pour permettre la croissance de ces particules en les mouillant avec des particules fraîchement pulvérisées en émulsion ou en suspension de l'étape b) ou dans la partie supérieure du lit fluidisé pour permettre la croissance de ces particules par agglomération jusqu'à une taille dans la plage de 100 µm à 400 µm.

2. Procédé selon la revendication 1, dans lequel l'ingrédient actif est un arôme, un parfum et/ou une vitamine pour un produit d'alimentation humaine, un produit d'alimentation animale, une boisson ou un produit pharmaceutique.

3. Procédé selon la revendication 2, dans lequel l'arôme est choisi dans le groupe constitué d'un ingrédient à arôme unique, d'un arôme composé, d'un arôme industriel, d'une huile essentielle ou d'un extrait.

4. Procédé selon la revendication 3, dans lequel l'huile essentielle est choisie dans le groupe constitué de l'huile de citron vert, de l'huile de citron, de l'huile d'orange, de l'huile de menthe poivrée, de la cannelle, du poivre, du gingembre et de leurs mélanges.

5. Procédé selon l'une quelconque des revendications 1 à 4, dans lequel l'hydrate de carbone de faible poids moléculaire est un mono-, un di- et un oligosaccharide et/ou de l'alcool correspondant.

6. Procédé selon la revendication 5, dans lequel l'hydrate de carbone est choisi dans le groupe constitué du glucose, du fructose, du maltose, du saccharose, du lactose, de la maltodextrine et de l'inuline.

7. Procédé selon l'une quelconque des revendications 1 à 4, dans lequel le composé polyhydroxylé est choisi dans le groupe constitué du xylitol, du mannitol, du sorbitol, du lactitol, du maltitol et de l'isomalt.

8. Procédé selon l'une quelconque des revendications 1 à 7, dans lequel l'agent filmogène est choisi dans le groupe constitué d'une protéine, de gomme d'acacia, de pectine, d'amidon modifié et d'un ester d'acide gras de polyglycérol.

9. Procédé selon l'une quelconque des revendications 1 à 8, dans lequel ledit séchage par pulvérisation est réalisé à une température d'entrée d'air d'environ 130 °C à 180 °C et à une température de sortie d'air d'environ 60 °C à 95 °C.

10. Procédé selon la revendication 9, dans lequel la température d'entrée d'air est de 145 °C à 165 °C.

11. Poudre exempte de poussière de microcapsules, au moins 90 % en poids ayant une taille particulaire d'environ 100 µm à 400 µm, avec une masse volumique apparente d'au moins 0,4 g/ml et une teneur en humidité de 0,5 % à 4 % en poids ayant une matrice vitreuse d'au moins un mono-, un di- et un oligosaccharide et/ou de l'alcool correspondant contenant piégé au moins un ingrédient actif, lesdites particules étant formées en pulvérisant une émulsion ou une suspension aqueuse d'ingrédient(s) actifs) et un matériau matriciel dans une tour de séchage par pulvérisation tout en alimentant en air à une température d'environ 100 °C à 180 °C, de préférence à une température d'environ 130 °C à 180 °C, mieux encore à une température d'environ 145 °C à 165 °C, en transférant les particules partiellement séchées dans un lit fluidisé pour un séchage final à une température de 25 °C à 60 °C, mieux à une température d'environ 40 °C à 50 °C, tout en remettant en circulation les particules plus fines du lit fluidisé à la tour de séchage par pulvérisation pour permettre la croissance de ces particules en les mouillant avec des particules fraîchement pulvérisées en émulsion ou en suspension ou à la partie supérieure du lit fluidisé pour permettre la croissance de ces particules par agglomération.

12. Procédé pour aromatiser un produit d'alimentation humaine ou une boisson ou un supplément alimentaire pour animal, comprenant l'addition de l'arôme encapsulé sous la forme de microparticules préparées par le procédé selon l'une quelconque des revendications 1 à 10 en quantité efficace.

13. Procédé selon la revendication 12, dans lequel les microparticules sont pressées en comprimés.

14. Procédé selon la revendication 12 ou 13, comprenant l'addition de l'arôme encapsulé à un mélange sec de nourriture humaine, en particulier à une soupe instantanée, à une sauce ou à un dessert.

15. Procédé selon la revendication 12, dans lequel la boisson obtenue est une boisson sèche, en particulier une boisson sèche en poudre.

16. Procédé selon la revendication 15, dans lequel la boisson sèche est du thé ou du café instantané.

17. Procédé selon la revendication 12, comprenant l'addition de l'arôme encapsulé à une confiserie.
